# EUROPEAN PATENT APPLICATION

(11) **EP 4 589 789 A1**
(43) Date of publication of application: **23.07.2025**
(21) Application number: 25152136.5
(22) Date of filing: 15.01.2025
(51) Int. Cl.: H02G 1/12, B23D 61/18

(54) **AN APPARATUS FOR CUTTING A COVER OF A POWER CABLE**

(30) Priority: 17.01.2024 NL 1044791
(71) Applicant: Özcan, Evren, 5658 LN Eindhoven (NL)
(72) Inventor: Özcan, Evren, 5658 LN Eindhoven (NL)

(57) **Abstract**

The invention provides an apparatus for cutting a cover of a power cable, wherein the apparatus comprises a first handle, a second handle, and a wire extending along an axis of elongation; wherein a first end of the wire is connected to the first handle; wherein a second end of the wire is connected to the second handle; wherein the wire is made of a polymer material; wherein a cross-section of the wire comprises a cross-sectional shape; wherein the cross-sectional shape is a star.

## Description

### FIELD OF THE INVENTION

The present invention relates to an apparatus for cutting a cover of a power cable. The invention further relates to the use of said apparatus. The invention further relates to a method of cutting a cover of a power cable. The invention further relates a cable knife for cutting a cover of a power cable. The invention further relates to the use of said cable knife.

### BACKGROUND OF THE INVENTION

Electricity producers and their customers are connected via the electrical grid; also known as the power grid, the electricity network, or the power distribution network. The power grid typically comprises a high voltage network (e.g. 380 kilovolt and 220 kilovolt networks) to distribute power to electrical substations. The substations transform the voltages of the high voltage network to middle or lower voltages (e.g. 3 kilovolt, 25 kilovolt, 50 kilovolt, 110 kilovolt, and 150 kilovolt). A series of substations (or transformation stations) may therefore gradually transform these middle or lower voltages even further to the 230-volt network for residential use, in e.g. the Netherlands.

Hence, the power distribution network typically comprises a network of power lines and transformers. A part of the power lines comprises power cables, branches thereof, and cable joints.

Such power cables typically consist of 1, 3 or 4 conducting (metal) cores with isolation, and a cover comprising multiple sheaths. The conducting cores are typically aluminum or copper. The sheaths of the cover may for example comprise isolation, insulation, and possibly armoring. The outer sheath can be considered an outer mantle. The outer sheath of the cover is typically made of a polymer material to protect the power cable from the ambient.

Although no longer manufactured and implemented in the Netherlands, the GPLK (*Gepantserde Papier-Lood Kabel*) power cable has previously been very popular for implementation in the low voltage network. Therefore, the GPLK is a power cable that is still widely present in the underground low voltage power grid of the Netherlands. Currently, the XLPE (Cross-Linked Poly-Ethylene) power cable is more widely implemented. While the GPLK power cable has paper and/or jute isolation, lead armoring, and a polymer outer mantle; the XLPE power cable has cross-linked poly-etylene isolation, copper armoring, and polymer outer mantle.

Power cables of the low voltage network (or: low voltage power grid) are typically buried underground. These power cables may be connected using cable joints (in Dutch: mof). Such cable joints may also be used for branching new lines from existing power cables, for example for new construction projects. Cable joints may be common sources for malfunctions in the low voltage network. Therefore, the underground power cables may require frequent maintenance and repair as well.

However, connecting, branching, maintaining and/or repairing underground power cables is not straightforward and burdensome.

Since larger trenches are costly and undesired in urban areas with a high density of underground infrastructure (such electricity cables, communication lines, gas pipes, water pipes, sewage, and similar conduits), a specialist needs to dig a small-size trench around the power cable or cable joint. Such a small-size trench - in practice typically cluttered by other underground infrastructure as well - clearly limits the working space of the specialist. The specialist is therefore faced with the problem of quickly identifying and reaching the correct power cable. The cutting of the cover of the power cable is also impeded.

The cutting of the cover of the power cable - within the above mentioned small-size trench and clutter - is still performed manually by an expert. A cable knife is typically used. The blade of a cable knife is made of stainless steel. The handle of a cable knife is electrically isolated. For example, after cutting the outer sheath of the power cable, possible armoring may be bent away and secured, and a further sheath of isolation may be cut to reach the conducting (metal) cores with isolation.

Even though the metal blade of said cable knife can easily slice through different sheaths of the cover of a power cable, without expert training and craftmanship on the job, it poses the risk of the expert cutting into the metal core of the power cable. This is a known risk and problem. The use of a cable knife can therefore lead to dangerous situations (such as electric shocks).

Moreover, due to said clutter in the small-size trench, another problem is that the specialist cannot always safely cut through the cover of the power cable, because the specialist cannot position the cable knife correctly onto to the cover of the power cable, or various sheaths thereof.

Hence, there is clear need for improved apparatuses for cutting a cover of a power cable, which apparatuses are not only cost-effective and time-efficient for the technical task at hand, but also improve safety, ergonomics, and working in limited spaces.

### SUMMARY OF THE INVENTION

It is an object of the invention to provide an improved apparatus for cutting a cover of a power cable, which at least alleviates the problems and disadvantages mentioned above. Thereto, the invention is defined by the appended independent claims and dependent claims.

Thereto, the invention provides an apparatus for cutting a cover of a power cable, wherein the apparatus comprises a first handle, a second handle, and a wire extending along an axis of elongation; wherein a first end of the wire is connected to the first handle; wherein a second end of the wire is connected to the second handle. Further, in a preferred embodiment, a cross-section of the wire comprises a cross-sectional shape; wherein the cross-sectional shape is a star.

Said apparatus may alternatively be phrased as a tool. Said wire may be characterized as an electrically non-conducting wire. According to the invention, the wire is made of a polymer material. The invention further provides the use of said apparatus according to the invention to cut a cover of a power cable.

It is further object of the invention to provide an improved method of cutting a cover of a power cable. Hence, the invention provides a method of cutting a cover of a power cable, performed by an apparatus according to the present invention, wherein the method comprises: positioning the apparatus around the power cable, wherein the power cable is arranged in between the first handle, the second handle, and the wire; wherein the wire abuts at least part of the cover of the power cable; alternately pulling the first handle and the second handle so as to move the abutting wire over the cover of the power cable, so as to cut the cover of the power cable. Said cut may be by means of friction and/or (the resulting) heat. The embodiments and advantages of the apparatus according to the embodiment apply mutatis mutandis to the method according to the invention.

Hence, the present invention provides an apparatus comprising a first handle, a second handle, and a wire extending along an axis of elongation. The wire may be flexible. The first end of the wire is connected to the first handle. The second end of the wire is connected to the second handle. This structure enables positioning the apparatus easily and ergonomically around the power cable, particularly when working in limited spaces. The power cable is thereby arranged in between the first handle, the second handle. The wire abuts at least part of the cover of the power cable, e.g. abuts a part of the circumference (of the cover) of the power cable. Subsequently, by alternately pulling the first handle and the second handle, the abutting wire is moved (e.g. manually) over the cover of the power cable, and the cover of the power cable is cut.

The inventor of the present application has namely found that a wire made of a polymer material cuts through the cover of a typical power cable, for example a power cable of the low voltage power grid; because the polymer wire causes friction and heat when moved over the cover, which results in the wire cutting through the cover. Throughout the application, said cover may alternatively be phrased as a sheath or an envelope.

As mentioned, in a preferred embodiment, the cross-section of the wire comprises a cross-sectional shape; wherein the cross-sectional shape is a star. Phrased alternatively, in a preferred embodiment, the cross-section of the wire comprises a cross-sectional shape, wherein the cross-sectional shape is a regular star polygon. For example, said star, or: said regular star polygon, may be a pentagram, or any other n-pointed star, wherein n is at least three.

The inventor of the present application has further found that the proposed apparatus cuts clean through the cover of a typical power cable. The incision is consistent and smooth. Because the cross-sectional shape of the wire is preferably a star (or: star-shaped, or: a regular star polygon), the wire has a durable core, and is not only suitable to cut through the cover of the power cable, but also provides the additional advantages of (the points of the star) facilitating the carrying away of particles (i.e. debris) of the cut cover (i.e. e.g. via the grooves resulting from the points of the star of the star-shaped cross-sectional shape).

Furthermore, since the wire is made of a polymer material, which is not an electrically conducting material, the cutting action of the cover of the power cable can also be done safely and without elaborate expert training. Hence, the present invention provides an apparatus, and associated method, that is not only cost-effective and time-efficient for the technical task of cutting the cover of a power cable, but also improves safety, ergonomics, and working in limited spaces. It is expected that the apparatus and method according to the present invention will revolutionize working with power cables in construction sites, and consequently improve the completion rate and reduce the required time for cabling projects. For example, cabling projects related to the low voltage power grid.

More specifically, the cover of the power cable may comprise a plurality of sheaths of isolation. The isolation may be a polymer isolation. For example, the cover of the XPLE power cable may comprise at least one sheath made of Polyethylene (PE). Other power cables may comprise sheaths of isolation made of Polyolefins, such as for example Polyethylene (PE), polystyrene (PS) and polypropylene (PP), but also made of Polyurethane (PU), Rubber, and/or Polyvinylchloride (PVC).

The wire of the apparatus according to the invention can cut through the cover of a power cable comprising such sheaths of isolation, such as for example the XPLE power cable. The wire is made of a polymer material that is able to cut through typical sheaths of polymer isolation of such a power cable. Hence, in an embodiment, the polymer material comprises at least one of: Polyamide (PA), Acrylonitrile Butadiene Styrene (ABS), Polycarbonate (PC), Polyoxymethylene (POM), polyvinylidene difluoride (PVDF). The polymer material of the wire according to the invention is preferably Polyamide (PA), such as nylon. Such durable polymers may for example cut through isolation made of Polyethylene (PE) and Polyvinylchloride (PVC) according to the invention. These polymers - PA, PC, POM, ABS, PVDF - are relatively hard and have a high resistance to deformation under stress. These polymers also have toughness and abrasion resistance. This means that they can withstand the force required to cut through e.g. PVC without deforming or breaking. In an embodiment, said polymer material is a biopolymer material (i.e. a bioplastic). Such an embodiment is advantageous, because the microplastics wearing off during use of the apparatus are less harmful for the ambient.

Hence, in aspects, the cover of the power cable may comprise at least one sheath made of a cover material, wherein the cover material is different from the polymer material. In further aspects, the hardness of the polymer material of the wire is higher than the cover material. In further aspects, the polymer material has a higher melting temperature than the cover material.

For example, the polymer material of the wire may be polyamide, whereas the cover of the power cable may comprise at least one sheath made of a cover material being polyethylene. The melt temperature of polyamide typically ranges from 220°C to 280°C. The melt temperature of polyethylene depends on its density and high-density polyethylene (HDPE) has a melt temperature of about 130°C to 135°C, while low-density polyethylene (LDPE) has a melt temperature of about 105°C to 115°C. The hardness of polyamide (PA) is typically around 70-85 Shore D (though the hardness can vary depending on the specific type of polyamide used), while the hardness of polyethylene is typically a Shore D hardness of 62-65 for high-density polyethylene (HDPE) and typically a Shore D hardness of 40-50 for low-density polyethylene (LDPE).

In an embodiment, the power cable may be a power cable of a low voltage power grid, wherein the cover may comprise a cover material, wherein the polymer material may have a higher hardness and/or higher melting temperature than the cover material.

In an embodiment, the wire comprises a diameter between 1 millimeter and 4 millimeters. In a further embodiment, the wire comprises a diameter between 1.5 millimeter and 2.5 millimeters.

Such an embodiment is advantageous, because the inventor has found that - for typical power cables in the low voltage network, for example aluminium core cables with a cross sectional area of 95 mm2 or 150 mm2 - the wire diameter between 1 millimeter and 4 millimeters, and preferably between 1.5 millimeter and 2.5 millimeters is optimal for cutting power cables of the low voltage network, while ensuring the durability of the wire (over multiple projects).

It is further beneficial that the wire according to the invention comprises a surface texture, so as to increase friction when cutting the cover of the power cable. As the cover of power cables are typically smooth, such a surface texture is also beneficial to prevent the wire according to the invention, that is abutting the cover of the power cable in use, to slide along the cover of the power cable. Hence, the surface texture helps to maintain the wire positioned on the cover.

Hence, in an embodiment, the wire comprises a surface texture. In an embodiment, the wire may comprise a wavy surface extending along the axis of elongation. In an embodiment, the wire may comprise a grid shaped surface texture. In an embodiment, the wire may comprise a surface roughness, Ra, of at least 1 micrometer.

As mentioned, the cross-section of the wire comprises a cross-sectional shape; wherein the cross-sectional shape is a star. For example, said star may be one of a four-point star, a five-point star (e.g. a pentagram), a six-point star, an eight-point star, an irregular star.

Alternatively, as an embodiment, not claimed in the present application, the cross-sectional shape may be one of: a circle, an ellipse, a polygon, a triangle, a trapezoid, a pentagon, an octagon, a cross. Such an embodiment may be advantageous, as such shapes may be suitable to cut through the cover of the power cable, whereas for example a star shape may have additional advantages of facilitating the carrying away of particles of the cut cover.

In an embodiment, the wire comprises at least one groove and/or at least one ridge extending along (at least part of) said axis of elongation. In an embodiment, the at least one groove and/or the at least one ridge may spiral around the axis of elongation. Such an embodiment may be advantageous, because such a groove may carry away particles of the cut cover and thereby improve the cutting action. Such an embodiment may be advantageous, because such a groove and/or ridge may provide rigidity and durability to the wire.

Similarly, in an embodiment, not claimed in the present application, the wire may comprise at least one protrusion arranged on the wire. For example, the wire may comprise a plurality of protrusions at a center portion of the wire. Said center portion may be halfway the wire. Said protrusion may alternatively be phrased as teeth. Said protrusion may in examples be monolithic with said wire. Alternatively, said protrusion may be made of a protrusion material, wherein the protrusion material may be a different polymer material than the polymer material of the wire, or wherein the protrusion material may be a non-electrically conducting material that is not a polymer material, such as for example glass.

Similarly, in an embodiment, not claimed in the present application, the wire consists of a plurality of intertwined wire filaments. For example, the intertwined wire filaments may be helically arranged along the axis of elongation. For example, the intertwined wire filaments may be braided. Such an embodiment advantageously increases the surface area of the wire, thereby rendering more surface area to generate friction, and cut the cover of the power cable with said movement of the abutting wire according to the invention. Moreover, the plurality of filaments may improve durability and strength of the wire, and build in a redundancy if one of said plurality of intertwined filaments breaks.

In an embodiment, the wire comprises a length between 20 centimeters and 100 centimeters, for example between 30 centimeters and 70 centimeters. Such an embodiment may be advantageous, as such a length may be suitable for ergonomically positioning the apparatus around the power cable - for example a typical power cables in the low voltage network - and performing the step of alternately pulling the first handle and the second handle so as to move the abutting wire over the cover of the power cable, so as to cut the cover of the power cable.

In alternative examples, the wire may comprise a length between 100 and 200 centimeters. Such alternative examples may be advantageous for situations in which the underground infrastructure is too crowded, that the cutting action of the cover of the power cable needs to be done remotely from a certain distance.

The polymer material may also comprise particles and/or fillers. In an embodiment, the polymer material comprises plastic particles, glass particles, stone particles, rubber particles, or (insulating) ceramic particles. Such particles are characterized by not being electrically conductive.

In an embodiment, the first end of the elongated wire is fixated in the first handle, wherein the second end of the elongated wire is fixated in the second handle. Said fixation may be with the use of known fasteners.

In examples, the first end of the elongated wire is (e.g. ultrasonically) welded to the first handle, wherein the second end of the elongated wire is (e.g. ultrasonically) welded in the second handle. Such an embodiment may provide strength to the apparatus. In an embodiment, the first end of the elongated wire is releasably fixated to the first handle, wherein the second end of the elongated wire is releasably fixated to the second handle. This may be advantageous to reset the wire. In examples, the first end of the elongated wire is crimped to the first handle, wherein the second end of the elongated wire is crimped to the second handle. In examples, the first end of the elongated wire is press-fitted to the first handle, wherein the second end of the elongated wire is press-fitted to the second handle. In examples, the first end of the elongated wire is tied to the first handle, wherein the second end of the elongated wire is tied to the second handle.

In an embodiment, the first handle and/or the second handle comprises respectively a first space and/or a second space, wherein the first end of the wire is knotted and fixated in the first space of the first handle, and/or wherein the second end of the wire is knotted and fixated in the second space of the second handle. Said first space may be a first recess or first cavity. Said second space may be a second recess or second cavity. Hence, the first end of the wire comprises a first knot, and/or the second end of the wire comprises a second knot, wherein the first knot and the second knot are secured in respectively the first space and the second space.

In an embodiment, the first handle and/or the second handle comprises respectively a first space and/or a second space, wherein the first end of the wire comprises a thickened part and fixated in the first space of the first handle, and/or wherein the second end of the wire comprises a thickened part and fixated in the second space of the second handle. Said first space may be a first recess or first cavity. Said second space may be a second recess or second cavity. Hence, the first end and the second end are secured in respectively the first space and the second space.

In an embodiment, each of the first handle and the second handle comprises: a bottom handle part and a top handle part, wherein the bottom handle part is congruent to the top handle part, wherein the bottom handle part and the top handle part are mechanically fastened to one another to form respectively the first handle or the second handle. For example, said mechanically fastened may be glued, or screwed, clicked, or press fitted. Such an embodiment may be advantageous when (mass) manufacturing the apparatus according to the invention, and/or for fastening said wire to the respective handles.

In an embodiment, the first handle and the second handle are made of an electrically non-conducting material, preferably a polymer. For example, said handles may be made of wood, rubber or plastic.

In an embodiment, the first handle and/or the second handle comprise: a central part for connecting respectively said first end and/or said second end; a first extension connected to the central part, and a second extension connected to the central part, wherein the first extension is diametrically opposed to the first extension. Such an embodiment may be advantageous for firmly holding the apparatus with hands, especially when said hands are wearing protective gloves and/or mittens.

In an embodiment, the first handle and/or the second handle comprise: a central part for connecting respectively said first end and/or said second end, wherein the central part is arranged in a plane perpendicular to the axis of elongation at respectively said first end and/or said second end; a first extension arranged around the circumference of the central part, and a second extension arranged around the circumference of the central part and diametrically opposed to the first extension. Such an embodiment may be advantageous for firmly holding the apparatus with hands, especially when said hands are wearing protective gloves and/or mittens. Said extension may alternatively be phrased as a wing.

In an embodiment, the first handle and the second handle comprises a band or a string configured to receive a gloved hand.

In an embodiment, the polymer material may comprise a color pigment arranged for coloring the wire, wherein the color of the color pigment is indicative of the polymer material used. For example, a polyamide wire may be colored with a color pigment black, so as to indicate a first class of wires. For example, an ABS wire may be colored with a color pigment red, so as to indicate a second class of wires. The first and second class are different. This helps users of the wire to distinguish between apparatuses according to the invention, as some polymer material wires may be more suited for a certain cover of a power cable compared to other polymer material wires.

In an embodiment, all degrees of freedom of the wire are fixated at the point where respectively the first end of the wire and the second end of the wire connect to the respective first handle and second handle. Alternatively, the wire may only be fixated in a direction corresponding to the direction of the elongated axis, and/or in a direction perpendicular to the elongated axis, thereby leaving rotational movement around the elongated axis free.

In an embodiment, the apparatus comprises a blade configured to cut the cover of the power cable. Said blade may preferably be electrically isolated (or: insulated). Such an embodiment may be advantageous, as the apparatus may provide an additional cutting means for safely cutting the cover of the power cable, e.g. in the elongated axial direction of the power cable, e.g. after when the wire has made an initial cut.

In an embodiment, the first handle may comprise the (electrically isolated) blade. Said (electrically isolated) blade is electrically isolated. Said (electrically isolated) blade may comprise a blade material, wherein the blade material may be one of: a ceramic material, a metal material, a polymer material. Hence, said (electrically isolated) blade may be a ceramic blade. Said (electrically isolated) blade may be replaceable. Hence, when said (electrically isolated) blade wears off, said blade may be replaced. In an embodiment, the first handle may comprise the (electrically isolated) blade, wherein the first handle comprises a blade sheath and a slide mechanism configured to slide the (electrically isolated) blade in and out the blade sheath. Hence, said electrically isolated blade may be retractable (with respect to the first handle).

In an embodiment, the apparatus according to the invention is provided, wherein the first handle comprises a cable knife. Hence, the present invention foresees that the first handle is a cable knife, which cable knife may comprise a handle part and a blade connected thereto. Said blade may be replaceable, detachable and/or retractable. In a related embodiment, the first end of the wire is connected to said handle part. Said first end of the wire may be connected to the handle part such that the wire extends from the first handle (i.e. the cable knife) in a direction opposite to a cutting edge of the blade.

In an alternative embodiment, the apparatus according to the invention is provided, wherein the apparatus comprises a cable knife comprising the first handle and a blade. Said blade may be electrically isolated. Said first end of the wire is connected to the first handle such that the wire extends from the first handle in a direction opposite to a cutting edge of the blade.

All in all, the present invention provides an apparatus for cutting a cover of a power cable, wherein the apparatus comprises a first handle, a second handle, and a wire extending along an axis of elongation; wherein a first end of the wire is connected to the first handle; wherein a second end of the wire is connected to the second handle.

In an embodiment, the first handle may comprise a first conduit part comprising a first conduit and a first space; wherein the first conduit part is configured to receive the wire, wherein the wire passes through the first conduit; wherein the first conduit connects to the first space; wherein the first end of the wire is connected to the first handle in the first space. The first conduit part may comprise a tapered portion tapering the first conduit. Such a tapered portion may facilitate passing through the first end of the wire (or the wire itself) through the first conduit. Said first handle may comprise a first extension arranged around the first space, and a second extension arranged around the first space and diametrically opposed to the first extension. Such an embodiment may be advantageous for firmly holding the apparatus with hands.

More specifically, in a preferred embodiment, the first space is configured to hold a knot, wherein the first end of the wire is knotted into a first knot, wherein said first knot is fixated (or: held) in the first space, so as to connect the first end of the wire to the first handle in the first space. Such a first knot is thereby larger than said first conduit. Such a first knot prevents the first handle to be moved in axial direction beyond said first knot, thereby connecting the first end of the wire to the first handle, as one degree of freedom is fixed.

Similarly, for example additionally, in an embodiment, the second handle may comprise a second conduit part comprising a second conduit and a second space; wherein the second conduit part is configured to receive the wire, wherein the wire passes through the second conduit; wherein the second conduit connects to the second space; wherein the second end of the wire is connected (or: fixated, or: secured) to the second handle in the second space. The second conduit part may comprise a tapered portion tapering the second conduit. Such a tapered portion may facilitate passing through the second end of the wire (or the wire itself) through the second conduit. Said second handle may comprise a first extension arranged around the second space, and a second extension arranged around the second space and diametrically opposed to the first extension. Such an embodiment may be advantageous for firmly holding the apparatus with hands.

More specifically, in a preferred embodiment, the second space is configured to hold a knot, wherein the second end of the wire is knotted into a second knot, wherein said second knot is fixated (or: held) in the second space, so as to connect the second end of the wire to the second handle in the second space. Such a second knot is thereby larger than said second conduit. Such a second knot prevents the second handle to be moved in axial direction beyond said second knot, thereby connecting the second end of the wire to the second handle, as one degree of freedom is fixed.

In embodiments, said first space and/or said second space may comprise an adhesive, a resin, a clay, or a potting material. Such materials within said first space and/or said second space may further fasten the respective first end and/or the second end. Alternative fastening means may be envisioned similarly, such as for example wherein the respective first end and the second end are adhered, welded, glued, bolted, fitted, snapped, and/or tied in the respective first space and second space. Said respective space may alternatively be phrased as a recess or cavity.

In an embodiment, said first space may comprise an opening (to the ambient). The first handle may comprise a first cap configured to close the first opening of the first space. Said first cap may be arranged removable, or detachable relative to the first handle. Said first cap may be fitted into said first opening. Said first cap may for example be a rubber cap fitted into said first opening. Said cap may alternatively be a lid. Said first cap may pivot relative to the first handle. Said first cap may be positioned in a closed position or in an open position, wherein when in the closed position the first cap closes said first opening, wherein when in the open position the first cap opens up said first opening. Such a first cap may close the first space to the ambient when in closed position, and enable accessing the first end of the wire when in open position.

Similarly, for example additionally, in an embodiment, said second space may comprise an opening (to the ambient). The second handle may comprise a second cap configured to close the second opening of the second space. Said second cap may be arranged removable, or detachable relative to the second handle. Said second cap may be fitted into said second opening. Said second cap may for example be a rubber cap fitted into said second opening. Said cap may alternatively be a lid. Said second cap may pivot relative to the second handle. Said second cap may be positioned in a closed position or in an open position, wherein when in the closed position the second cap closes said second opening, wherein when in the open position the second cap opens up said second opening. Such a second cap may close the second space to the ambient when in closed position, and enable accessing the second end of the wire when in open position.

In an embodiment, the first handle is a T-shaped handle, and the second handle is T-shaped handle. In an embodiment, the first handle comprises a curvature for finger-gripping the first handle, and/or the second handle comprises a curvature for finger-gripping the second handle.

In an embodiment, the first handle comprises a first main bar and a first transverse bar, wherein the first transverse bar is connected to the first main bar, wherein the first transverse bar is arranged transverse to the first main bar. Moreover, in related embodiments, the first end of the wire is connected to the first transverse bar or the first main bar. In related embodiments, the first transverse bar is arranged substantially perpendicular to the first main bar. Said first main bar and said first transverse bar may be monolithic, such as a single injected molded part, molded part, or printed part. Such embodiments are advantageous, as a user of said apparatus may hold the first handle with at least one finger at one side of the first transverse bar and with at least one other finger at the other side of the first transverse bar, thereby improving grip.

In an embodiment, the second handle comprises a second main bar and a second transverse bar, wherein the second transverse bar is connected to the second main bar, wherein the second transverse bar is arranged transverse to the second main bar. Moreover, in related embodiments, the second end of the wire is connected to the second transverse bar or the second main bar. In related embodiments, the second transverse bar is arranged substantially perpendicular to the second main bar. Said second main bar and said second transverse bar may be monolithic, such as a single injected molded part, molded part, or printed part. Such embodiments are advantageous, as a user of said apparatus may hold the second handle with at least one finger at one side of the second transverse bar and with at least one other finger at the other side of the second transverse bar, thereby improving grip.

In embodiments, said first main bar comprises a first main bar length between 3 centimeters and 14 centimeters, preferably between 4 and 8 centimeters. In embodiments, said first transverse bar comprises a first transverse bar length between 1 centimeters and 10 centimeters, preferably between 1 centimeters and 5 centimeters. Such dimensions may be optimal for a hand grip.

In embodiments, said second main bar comprises a second main bar length between 3 centimeters and 14 centimeters, preferably between 4 and 8 centimeters. In embodiments, said second transverse bar comprises a second transverse bar length between 1 centimeters and 10 centimeters, preferably between 1 centimeters and 5 centimeters. Such dimensions may be optimal for a hand grip.

In embodiments, the first main bar and/or the first transverse bar comprises a blade, wherein said blade is electrically isolated (i.e. an electrically isolated blade). Said blade may for example be a ceramic blade or a polymer blade. Said blade may alternatively be a metal blade that is electrically isolated. In embodiments, said blade may be replaceable, detachable, or retractable.

Additionally, or alternatively, in embodiments, the second main bar and/or the second transverse bar comprises a blade, wherein said blade is electrically isolated (i.e. an electrically isolated blade). Said blade may for example be a ceramic blade or a polymer blade. Said blade may alternatively be a metal blade that is electrically isolated. In embodiments, said blade may be replaceable, detachable, or retractable.

It is a further object of the invention to provide an improved apparatus for cutting a cover of a power cable, which at least alleviates the problems and disadvantages mentioned above. Hence, in a further object of the invention, the invention provides an apparatus for cutting a cover of a power cable, wherein the apparatus comprises a cable knife comprising a first handle and a blade, a second handle, and a wire extending along an axis of elongation; wherein a first end of the wire is connected to the first handle; wherein a second end of the wire is connected to the second handle. Further, in a preferred embodiment, a cross-section of the wire comprises a cross-sectional shape; wherein the cross-sectional shape is a star. The embodiments, features, and/or advantages of the apparatus according to the invention applies mutatis mutandis to the apparatus of the further aspect of the invention. Said blade may be electrically isolated. Said first end of the wire is connected to the first handle such that the wire extends from the first handle in a direction opposite to (or: opposite and perpendicular to) a cutting edge of the blade.

It is an object of the invention to provide an improved cable knife for cutting a cover of a power cable, which at least alleviates the problems and disadvantages mentioned above. The invention also provides the use of such a cable knife according to the invention.

Hence, the invention provides an improved cable knife, wherein the cable knife is arranged for cutting a cover of a power cable; wherein the cable knife comprises a blade, a body, a handle, and a wire extending along an axis of elongation; wherein a first end of the wire is connected to the body of the cable knife; wherein a second end of the wire is connected to the handle; wherein the wire is made of a polymer material. Further, in a preferred embodiment, the cross-section of the wire comprises a cross-sectional shape, wherein the cross-sectional shape is a star. The embodiments, features, and/or advantages of the apparatus according to the invention applies mutatis mutandis to the cable knife according to the invention. It is further object of the invention to provide an improved use of the cable knife according to the invention.

In an embodiment, said blade is retractable and/or replaceable. In an embodiment, said cable knife comprises a sleeve configured to slide onto the blade for providing safety. Said sleeve may be made of a polymer material and connected to the cable knife. Said blade may be an electrically isolated blade. Said blade may be made of polymer material or ceramic material or metal material. In an embodiment, the first end of the wire is releasably connected to the body of the cable knife. Hence, the body may e.g. comprise a hook, an aperture, a clamp, etc. for releasably connecting the first end to the body of the cable knife.

In an embodiment, the cable knife comprises a central axis extending between two opposing edges of the cable knife, wherein the cable knife comprises a central plane perpendicular to the central axis, wherein the blade is arranged between a first edge of the opposing edges and the central plane, wherein the cable knife comprises a connection point for connecting the first end of the wire to the cable knife, wherein the connection point is arranged between a second edge of the opposing edges and the central plane. In embodiments, the central plane is arranged at the center of the central axis. In embodiments, said first end of the wire is connected to the cable knife such that the wire extends from the cable knife in a direction opposite to (or: opposite and perpendicular to) a cutting edge of the blade.

In an embodiment, the cable knife may comprise a compartment for holding (or: containing) at least part of the wire. The first end of the wire may for example be secured in said compartment. Such a compartment may be configured to reel in and out, and hold, the wire. Hence, said wire may be retractable within said compartment. Said compartment may for example comprise a spring-loaded axis for reeling the wire, wherein the first end of the wire may be connected to said spring-loaded axis.

The cable knife according to the present embodiment is advantageous, as none of the cable knifes known to date have a wire according to the invention for cutting a cover of a power cable. This provides a cable knife an additional means for cutting a cover of a power cable, especially in situations where the blade of the cable knife falls short, e.g. in cluttered and limited spaces, or in more easily making circumferential cuts therein.

### BRIEF DESCRIPTION OF THE DRAWINGS

The invention will now be further elucidated by means of the schematic non-limiting drawings:
Fig. 1 depicts schematically an embodiment of an apparatus according to the invention;
Fig. 2 depicts schematically an embodiment of an apparatus according to the invention;
Fig. 3 depicts schematically an overview of wire cross sections according to the invention;
Fig. 4 depicts schematically an embodiment of a method according to the invention;
Fig. 5 depicts schematically an embodiment of an apparatus according to the invention.
Fig. 6 depicts schematically an embodiment of an apparatus according to the invention.
Fig. 7 depicts schematically an embodiment of an apparatus according to the invention.
Fig. 8 depicts schematically an embodiment of an apparatus according to the invention.
Fig. 9 depicts schematically an embodiment of a cable knife according to the invention.

### DETAILED DESCRIPTION OF THE EMBODIMENTS

As mentioned, there is clear need for improved apparatuses for cutting a cover of a power cable, which apparatuses are not only cost-effective and time-efficient for the technical task at hand, but also improve safety, ergonomics, and working in limited spaces. The present invention fulfills these needs. The invention will be described with reference to the Figures.

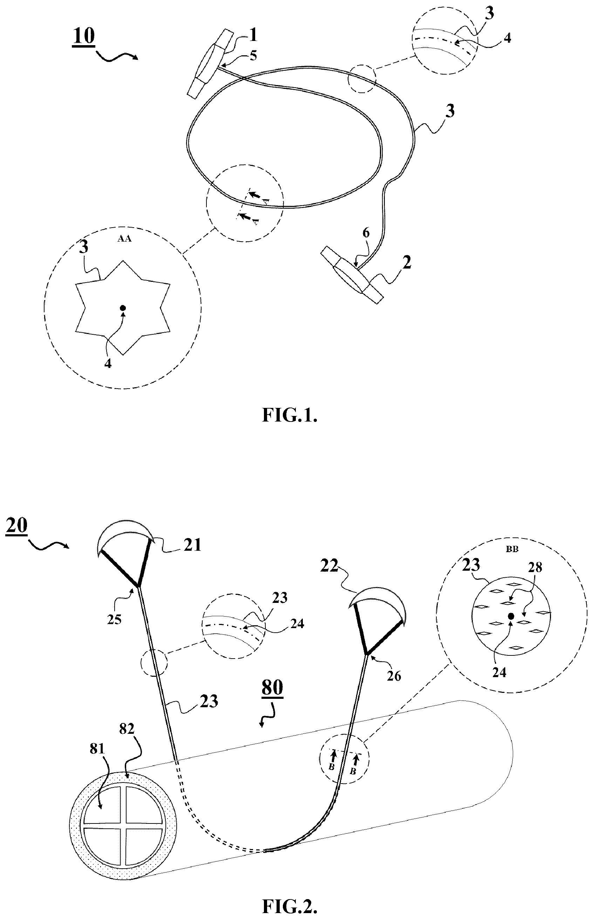

Figure 1 depicts schematically, by non-limiting example, an apparatus 10 for cutting a cover of a power cable (not depicted). The apparatus 10 may alternatively be phrased as a tool or a cutting device.

The power cable is a typical power cable of a low voltage power grid. For example, the XLPE power cable has cross-linked poly-ethylene isolation, copper armoring, and a polymer outer mantle. Hence, the cover of the power cable may comprise at least one sheath, wherein the at least one sheath comprises insulation made of a cover material such as a polymer, a paper, hemp and/or jute.

The power cable may in some alternative examples be a power cable of a high voltage power grid. The invention may also, in some instances, apply for such power cables.

Referring to figure 1, The apparatus 10 comprises a first handle 1, a second handle 2, and a wire 3. The wire 3 extends along an axis of elongation 4. The wire 3 is flexible. The axis of elongation 4 can be considered as the centerline of the (elongated) wire 3. The wire 3 comprises a first end 5 and an opposite second end 6. The first end 5 of the wire 3 is connected to the first handle 1. The second end 6 of the wire is connected to the second handle 2. The first end 5 of the wire 3 is fixated in the first handle 1. The second end 6 of the wire 3 is fixated in the second handle 2. Alternatively, the respective ends may be rotationally fixated in the respective handles, i.e. leaving the rotational degree of freedom open, but only be fixated in the elongated direction of the wire. The first handle 1 and the second handle 2 are both the same. The first handle and the second handle are made of an electrically non-conducting material, preferably a polymer (e.g. a plastic or a rubber).

According to the present invention, the wire 3 is an electrically non-conducting wire. More specifically, the wire 3 is made of a polymer material. The wire comprises a length of 80 centimeters, but may be envisioned with a different length, such as between 30 centimeters and 100 centimeters.

Here, said polymer material is Polyamide (PA), but may alternatively be a similar polymer as mentioned in the present application. The cover of the power cable (i.e. e.g. XPLE) comprises polyethylene (PE). For example, the outer mantle that needs to be cut is made of the cover material polyethylene (PE). Hence, the polymer material is different from the material (i.e. cover material) at least one sheath of the cover of the power cable. The difference may be in melt temperature and hardness. For example, the melt temperature of polyamide typically ranges from 220°C to 280°C. The melt temperature of polyethylene is typically between 130°C to 135°C for high-density polyethylene (HDPE) and typically between 105°C to 115°C for low-density polyethylene (LDPE). The hardness of polyamide (PA) is typically around 70-85 Shore, while the hardness of high-density polyethylene (HDPE) is typically 62-65 Shore D hardness and low-density polyethylene (LDPE) is typically 40-50 Shore D hardness of 40-50.

Still referring to figure 1, the apparatus 10 is configured to cut through the cover of the power cable, wherein the wire 3 made of the polymer material makes the cut. The structure of the apparatus 10 - having the elongated wire in between the two handles - enables easy and ergonomic placement of the apparatus 10 around the cover of the power cable, particularly when working in limited spaces that are crowded with other underground infrastructure. The wire 3 is thereby positioned around the power cable, in between the first handle 1, the second handle 2, and the wire 3. The wire 3 is positioned such that the wire 3 abuts at least part of the (circumference of the) cover of the power cable. By alternately pulling the first handle 1 and the second handle 2, thereby moving (manually) the abutting wire 3 over the cover of the power cable, the wire 3 will cut through the cover. The inventor of the present application has namely found that the wire 3 made of a polymer material cuts through the cover of a typical power cable, for example a power cable of the low voltage power grid; because the polymer wire 3 causes friction and/or heat, and thereby cuts the cover and/or melts a cut into the cover.

Furthermore, since the wire 3 is made of a polymer material, which is not an electrically conducting material, the cutting action of the cover of the power cable can also be done safely and without elaborate expert training. Hence, the present invention provides an apparatus 10, that is not only cost-effective and time-efficient for the technical task of cutting the cover of a power cable, but also improve safety, ergonomics, and working in limited spaces. A traditional cable knife is no longer required to cut through the cover of the power cable. It is expected that the apparatus and method according to the present invention will revolutionize working with power cables in construction sites, and consequently improve the completion rate and reduce the required time for cabling projects. For example, cabling projects related to the low voltage power grid.

Still referring to figure 1, the wire 3 has a cross-sectional shape. The cross-sectional shape is a six-point star. Alternatively, other cross-sectional shapes may be envisioned similarly.

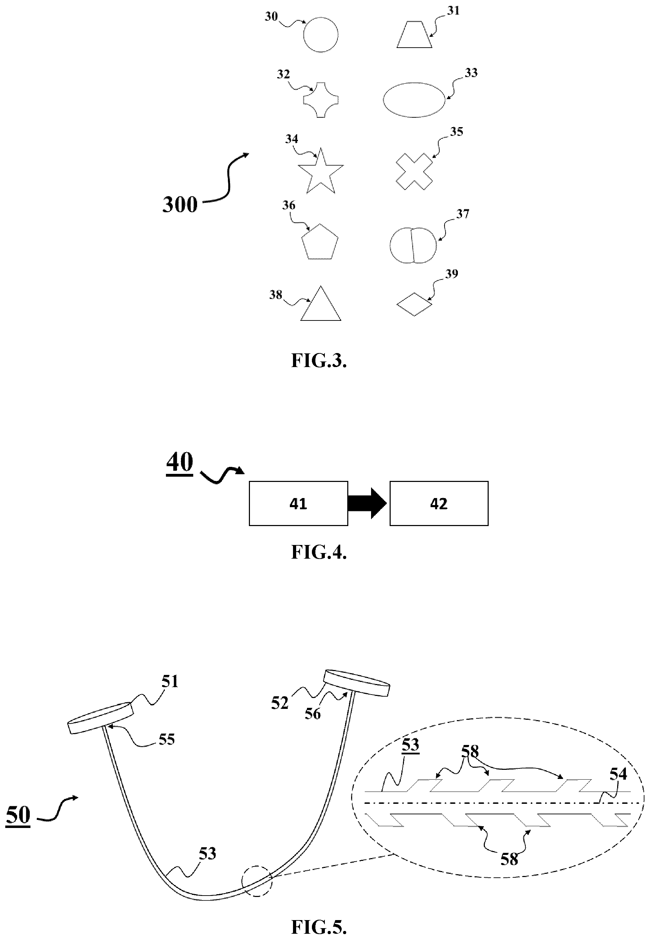

Figure 3 depicts schematically, by non-limiting example, an overview 300 multiple cross-sectional shapes suitable for the wire according to the invention. For example, the cross-sectional shape of the wire can be one of: a circle 30, an ellipse 33, a polygon, a triangle 38, a trapezoid 31, a pentagon 36, an octagon, a star, a five-point star 34, a cross 35, a parallelogram 39. The cross-sectional shape, referred to with reference 37, may also be caused by the wire consisting of a plurality of intertwined wire filaments. The cross-sectional shape, referred to with reference 32, may also be caused by the wire having a plurality of protrusions extending away from the center of the wire, with filleted or chamfered edges.

Still referring to figure 1, the wire has an (effective) diameter of 2 millimeters. Alternatively, said diameter may be between 1 millimeter and 4 millimeters. Such a range is advantageous for both strength and durability. The inventor has namely found that - for typical power cables in the low voltage network, for example aluminium core cables with a cross sectional area of 95 mm² or 150 mm² - the wire diameter between 1 millimeter and 4 millimeters, and preferably between 1.5 millimeter and 2.5 millimeters is optimal for cutting power cables of the low voltage network, while ensuring the durability of the wire (over multiple projects).

Albeit optionally, as depicted in figure 1, the first handle 1 comprises a central part 11, a first extension 12, and a second extension 13. Said central part 11 connects the first end 5 of the wire 3 to the first handle 1. The central part 11 of the first handle 1 is thereby arranged in a plane perpendicular to the axis of elongation 4 at said first end 5. Said central part 11 further has a circumference. The first extension 12 is arranged around the circumference of said central part 11. The second extension 13 is arranged around the circumference of said central part 11, and diametrically opposed to the first extension 12. The mentioned extensions may alternatively be phrased as wings, rims, or protrusions.

Such a first handle 1 and second handle 2 may be advantageous in providing additional grip, and thereby improved operation of the apparatus 10 according to the invention. These handles may be designed alternatively. For example, the first handle and the second handle may alternatively comprise a band or a string configured to receive a hand, such as a gloved hand.

Albeit optionally, the wire may comprise a surface texture. This improves friction and abrasion when cutting the cover of the power cable. As the cover of power cables are typically smooth, such a surface texture is also beneficial to prevent the wire according to the invention, that is abutting the cover of the power cable in use, to slide along the cover of the power cable. Hence, the surface texture helps to maintain the wire positioned on the cover.

Albeit optionally, in alternative examples, the polymer material may also comprise particles and/or fillers; such as for example plastic particles, glass particles, stone particles, rubber particles, or (insulating) ceramic particles. Such particles are characterized by not being electrically conductive, and may improve the wire cutting the cover of the power cable, when the apparatus according to the invention is in use.

Figure 2 depicts schematically, by non-limiting example, an embodiment of an apparatus 20 for cutting a cover of a power cable 80. The apparatus 20 may alternatively be phrased as a tool or a cutting device. The power cable is a typical power cable of a low voltage power grid. For example, the XLPE power cable. The power cable 80 as depicted in figure 2 consists of four metal cores 81 and a cover 82 comprising multiple sheaths (or layers) of isolation, possible armoring, and an outer mantle. For example, the XLPE power cable has cross-linked poly-ethylene isolation, copper armoring, and a polymer outer mantle. Hence, the cover of the power cable may comprise at least one sheath, wherein the at least one sheath comprises insulation made of polymer, paper, hemp and/or jute. Here, the cover is made of a cover material of polyethylene (PE).

Referring to figure 2, The apparatus 20 comprises a first handle 21, a second handle 22, and a wire 23. The wire 23 extends along an axis of elongation 24. The wire 23 is flexible. The axis of elongation 24 can be considered as the centerline of the (elongated) wire 23. The wire 23 comprises a first end 25 and an opposite second end 26. The first end 25 of the wire 23 is connected to the first handle 21. The second end 26 of the wire is connected to the second handle 22. The first end 25 of the wire 23 is fixated in the first handle 21. The second end 26 of the wire 23 is fixated in the second handle 22. The first handle 21 and the second handle 22 are both the same. The first handle and the second handle are made of an electrically non-conducting material. Here, the first handle 21 and the second handle 22 are made of rubber, and comprise a band or a string configured to receive a hand (therethrough).

According to the present invention, the wire 23 is an electrically non-conducting wire. More specifically, the wire 23 is made of a polymer material. The wire 23 comprises a length between 20 centimeters and 100 centimeters. The length is here 70 centimeters. The wire 23 comprises a circular cross-sectional shape, but may alternatively be any other cross-sectional shape mentioned in the present application, for example as shown in figure 3. The wire may optionally comprise a surface texture. Here, said polymer material is for example Acrylonitrile Butadiene Styrene (ABS). Alternatively, said polymer material may be another polymer material mentioned in the present application, such as Polyamide.

As mentioned, the cover of the power cable (i.e. e.g. XPLE) comprises polyethylene (PE). For example, the outer mantle that needs to be cut is made of the cover material polyethylene (PE). Hence, the polymer material (i.e. ABS) is different from the material (i.e. cover material) at least one sheath of the cover of the power cable. The difference may be in melt temperature and hardness. The melt temperature of Acrylonitrile Butadiene Styrene (ABS) may typically be in the range between 200°C to 240°C. The melt temperature of polyethylene is typically between 130°C to 135°C for high-density polyethylene (HDPE) and typically between 105°C to 115°C for low-density polyethylene (LDPE).

Albeit optionally, but depicted in figure 2, the polymer material of the wire 23 comprises particles and/or fillers. Here, the particles and/or fillers are glass particles 28, but may be any other electrically non-conducting particles and/or fillers, such as for example plastic particles, particles, stone particles, rubber particles, or (insulating) ceramic particles. Such glass particles may improve the friction of the wire on the cover of the power cable when the apparatus 20 is in use for cutting the cover 82 of the power cable 80.

Still referring to figure 2, the wire 23 has an (effective) diameter of 2.5 millimeters. Alternatively, said diameter may be between 1 millimeter and 4 millimeters. Such a range is advantageous for both strength and durability. The inventor has namely found that - for typical power cables in the low voltage network, for example aluminium core cables with a cross sectional area of 95 mm² or 150 mm² - the wire diameter between 1 millimeter and 4 millimeters, and preferably between 1.5 millimeter and 2.5 millimeters is optimal for cutting power cables of the low voltage network, while ensuring the durability of the wire (over multiple projects). Diameters between 1.0 and 1.5 millimeter may also be implemented to cut the cover of a power cable of a low voltage power grid, but may be more suitable for one-time or two-time use.

As a result, the apparatus 20 is configured to cut through the cover 82 of the power cable 80. The structure of the apparatus 20 - having the elongated wire 23 in between the two handles 21, 22 - enables easy and ergonomic placement of the apparatus 20 around the (circumference of the) cover 82 of the power cable 80. The wire 23 is thereby positioned around the power cable 80, in between the first handle 21, the second handle 22, and the wire 23. The wire 23 is positioned such that the wire 23 abuts at least part of the (circumference of the) cover 82 of the power cable 80. By alternately pulling the first handle 21 and the second handle 22, thereby moving (manually) the abutting wire 23 over the cover of the power cable 80, the wire 23 will cut through the cover 82 thereof. The inventor of the present application has namely found that the wire 23 made of a polymer material cuts through the cover of a typical power cable 80, for example a power cable of the low voltage power grid; because the polymer wire 23 causes friction and/or heat, and thereby cuts the cover 82. The cut may be caused by heat (in other words the wire may burn through the cover of the power cable as a result of the resulting heat of friction).

Furthermore, since the wire 23 is made of a polymer material, which is not an electrically conducting material, the cutting action of the cover of the power cable can also be done safely and without elaborate expert training. Hence, the present invention provides an apparatus 20, that is not only cost-effective and time-efficient for the technical task of cutting the cover of a power cable, but also improve safety, ergonomics, and working in limited spaces. It is expected that the apparatus and method according to the present invention will revolutionize working with power cables in construction sites, and consequently improve the completion rate and reduce the required time for cabling projects. For example, cabling projects related to the low voltage power grid.

Figure 4 depicts schematically, by non-limiting example, an embodiment of a method 40 of cutting a power cable according to the invention. The method 40 of cutting a cover of a power cable is performed by the apparatus according to the present invention, such as the apparatus 10, 20 depicted in figure 1, figure 2, and figure 5 The method 40 comprises a step 41 of positioning the apparatus around the power cable, wherein the power cable is arranged in between the first handle, the second handle, and the wire. Thereby, the wire abuts at least part of the cover of the power cable. The method comprises a step 42 of alternately pulling the first handle and the second handle so as to move the abutting wire over the cover of the power cable, so as to cut the cover of the power cable. Said cut may be by means of friction and/or heat.

Figure 5 depicts schematically, by non-limiting example, an embodiment of an apparatus 50 according to the invention. The apparatus is configured to cut through a cover of a low voltage grid power cable. Said cover may comprise multiple sheaths made of a cover material. The cover comprises a cover material. Here, the cover material comprises Polyethylene (PE).

The apparatus 50 comprises a first handle 51, a second handle 52, and a wire 53. The wire 53 extends along an axis of elongation 54. The wire 53 is flexible. The wire 53 comprises a first end 55 and an opposite second end 56. The first end 55 of the wire 53 is connected to the first handle 51. The second end 56 of the wire is connected to the second handle 52. The first end 55 of the wire 53 is fixated in the first handle 51. The second end 66 of the wire 63 is fixated in the second handle 62. All degrees of freedom of the wire 63 are thereby fixated at the point where respectively the first end 65 and the second end 66 connect to the handle. The first handle 61 and the second handle 62 are both the same. The first handle and the second handle are made of an electrically non-conducting material, preferably a plastic material.

Alternatively, the wire may only be fixated in a direction corresponding to the direction of the elongated axis, and/or in a direction perpendicular to the elongated axis, thereby leaving rotational movement around the elongated axis free.

According to the present invention, the wire 53 is an electrically non-conducting wire. More specifically, the wire 53 is made of a polymer material. The wire 53 comprises a length between 20 centimeters and 100 centimeters. The length is here 50 centimeters. The wire 53 comprises a circular cross-sectional shape. Here, said polymer material is ABS or Polyamide. Alternatively, said polymer material may be Polycarbonate (PC), Polyoxymethylene (POM), polyvinylidene difluoride (PVDF), or similar polymer material. The polymer material has a higher hardness and a higher melting temperature than the cover material.

Still referring to figure 5, the wire 53 comprises a plurality of protrusions 58 arranged on the wire 53. The protrusions may alternatively be phrased as teeth. The protrusions 58 extend away from the axis of elongation 54. The protrusions may be angled or perpendicular to the axis of elongation 54. These protrusions 58 are monolithic with said wire 3. The wire 53 has an (effective) diameter of 3 millimeters (i.e. not including the height protrusions). Alternative diameters may be envisioned similarly, for example a diameter between 1.5 and 5 millimeters.

Albeit optionally, not depicted, in alternative embodiments, the wire may comprise a surface texture, such as a wavy surface texture. The surface texture may comprise a pattern, such as a grid pattern or wavy pattern, with patterned lines inclined or perpendicular to the elongated axis.

In alternative embodiments, not depicted, the wire may comprise at least one groove and/or at least one ridge extending along (at least part of) said axis of elongation. The at least one groove and/or the at least one ridge may for example spiral around the axis of elongation. The groove and/or ridge may provide rigidity and durability to the wire. Similarly, in yet further alternative embodiments, the wire may consist of a plurality of intertwined wire filaments. For example, the intertwined wire filaments may be helically arranged along the axis of elongation. For example, the intertwined wire filaments may be braided. Such plurality of filaments may improve durability and strength of the wire, and build in a redundancy if one of said plurality of intertwined filaments breaks.

As a result, the apparatus 50 is configured to cut through the cover of a power cable. For example, the cover of a power cable of a low voltage power grid. The apparatus 50 enables easy and ergonomic placement of the apparatus around the (circumference of the) cover of a power cable, such that the wire 53 abuts at least part of the (circumference of the) cover of the power cable. By alternately pulling the first handle 51 and the second handle 52, thereby moving (manually) the abutting wire 53 over the cover of the power cable, the wire 53 will cut through the cover of a typical power cable (of a low voltage power grid), because the polymer wire 53 causes friction and/or heat. The plurality of protrusions 58 further improves this cutting process. Hence, the present invention provides an apparatus 50, that is not only cost-effective and time-efficient for the technical task of cutting the cover of a power cable, but also improve safety, ergonomics, and working in limited spaces.

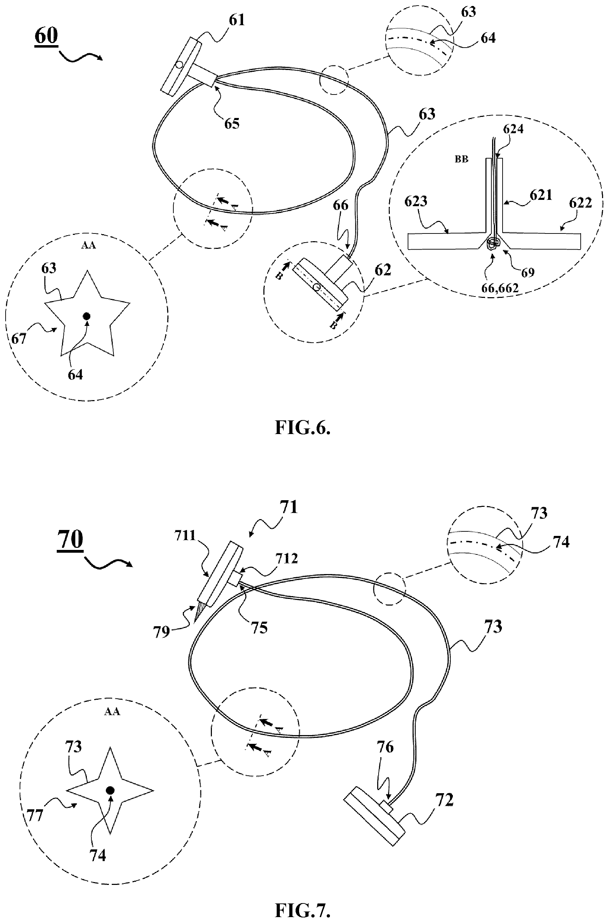

Figure 6 depicts, by non-limiting example, an apparatus 60 for cutting a cover of a power cable (not depicted). The apparatus 60 may alternatively be phrased as a tool or a cutting device. The power cable is a typical power cable of a low voltage power grid. The power cable may in some alternative examples be a power cable of a high voltage power grid. The invention may also, in some instances, apply for such power cables.

Referring to figure 6, The apparatus 60 comprises a first handle 61, a second handle 62, and a wire 63. The wire 63 extends along an axis of elongation 64. The wire 63 is flexible. The axis of elongation 64 can be considered as the centerline of the (elongated) wire 63. The wire 63 comprises a first end 65 and an opposite second end 66. The first end 65 of the wire 63 is connected to the first handle 61. The second end 66 of the wire is connected to the second handle 62. The wire 63 has a cross-sectional shape 67. The cross-sectional shape 67 is a star. Here, said cross-sectional shape is embodied as a five-point star, but may alternatively be a three-point star, a four-point star, a six-point star, a seven-point star, an eight-point star.

More specifically, the second handle 62 comprises a second space 69. Said space 69 may alternatively be phrased as a second cavity or second recess. The second handle 62 further comprises a second conduit part 623 for receiving the wire 63. The second conduit part 623 comprises a second conduit 624. The second conduit part may in examples (not depicted) a tapered portion tapering the first conduit. The second conduit 624connects to the second space 69. The wire 63 passes through the second conduit 624. The second end 66 of the wire 63 is connected to the second handle 62 in the second space 69. Namely, albeit optional, whilst other fastening means may be applied mutatis mutandis, the second end 66 of the wire 63 is knotted into a second knot 662. The second knot 662 is held (or: fixated, or: confined, or: connected, or: secured) in the second space 69 of the second handle 62. Thereby, the second knot 662 is larger than (a diameter of) said second conduit 624. The second conduit 624 may have a diameter that is at least a factor 1.1 larger than a diameter of said wire 63. Such a second knot 662prevents the second handle 62 to be moved in axial direction beyond said second knot, thereby connecting the second end 66 of the wire 63 to the first handle, as one degree of freedom is fixed. Hence, the second end 66 of the elongated wire 63 is releasably fixated to the second handle 62 (due to said second knot 662).

In alternative embodiments, other means may be envisioned for releasably fixating the wire to the second handle, such as a fastener, a press-fit connection, a tie, a screw-fit, a clamp, etc. The wire may for example be put through the second conduit, bent into a bend, and the second end put back into the second conduit, thereby being fitted and clamped in the second conduit. In further examples, the wire may comprise a ring or bead at the second bend through which the wire passes.

Still referring to figure 6, the second conduit may for example have a circular, triangular, or polygonal cross-sectional shape. Said second handle 62 further comprises a first extension 621 arranged around the second space 69, and a second extension 622 arranged around the second space 69 and diametrically opposed to the first extension 621. This may be advantageous for firmly holding the apparatus with hands. Hence, the second handle 62 comprises the second conduit part 623, the first extension 621, the second extension 622, and a second space 69. The second conduit part 623, the first extension 621, and the second extension 622 may be monolithic. For example, injection molded, molded, or printed as a single monolithic handle.

Here, the first handle 61 and the second handle 62 are the same. The details of the first handle 61 are therefore not separately depicted. Hence, the features described above for the second handle 62 of the apparatus 60 mutatis mutandis apply for the first handle 61. Thereby, first handle 61 and the second handle 62 are made of an electrically non-conducting material, preferably a polymer (e.g. a plastic or a rubber).

Still referring to figure 6, according to the present invention, the wire 63 is an electrically non-conducting wire. More specifically, the wire 63 is made of a polymer material. The wire comprises a length of 80 centimeters, but may be envisioned with a different length, such as between 30 centimeters and 100 centimeters.

Here, said polymer material is Polyamide (PA), but may alternatively be a similar polymer as mentioned in the present application. The cover of the power cable (i.e. e.g. XPLE) comprises polyethylene (PE). For example, the outer mantle that needs to be cut is made of the cover material polyethylene (PE). Hence, the polymer material is different from the material (i.e. cover material) at least one sheath of the cover of the power cable. The difference may be in melt temperature and hardness. For example, the melt temperature of polyamide typically ranges from 220°C to 280°C. The melt temperature of polyethylene is typically between 130°C to 135°C for high-density polyethylene (HDPE) and typically between 105°C to 115°C for low-density polyethylene (LDPE). The hardness of polyamide (PA) is typically around 70-85 Shore, while the hardness of high-density polyethylene (HDPE) is typically 62-65 Shore D hardness and low-density polyethylene (LDPE) is typically 40-50 Shore D hardness of 40-50.

Still referring to figure 6, the wire has an (effective) diameter of 1,8 millimeters. Alternatively, said diameter may be 2.4 millimeters. Alternatively, said diameter may be between 1 millimeter and 4 millimeters. Such a range is advantageous for both strength and durability. The inventor has namely found that - for typical power cables in the low voltage network, for example aluminium core cables with a cross-sectional area of 95 mm2 or 150 mm2 - the wire diameter between 1 millimeter and 4 millimeters, and preferably between 1.5 millimeter and 2.5 millimeters is optimal for cutting power cables of the low voltage network, while ensuring the durability of the wire (over multiple projects).

Still referring to figure 6, the apparatus 60 is configured to cut through the cover of the power cable, wherein the wire 63 made of the polymer material makes the cut. The structure of the apparatus 60 - having the elongated wire 63 in between the two handles 61, 62 - enables easy and ergonomic placement of the apparatus 60 around the cover of the power cable, particularly when working in limited spaces that are crowded with other underground infrastructure. The wire 63 is thereby positioned around the power cable, in between the first handle 61, the second handle 62, and the wire 63. The wire 63 is positioned such that the wire 63 abuts at least part of the (circumference of the) cover of the power cable. By alternately pulling the first handle 61 and the second handle 62, thereby moving (manually) the abutting wire 63 over the cover of the power cable, the wire 63 will cut through the cover. The inventor of the present application has namely found that the wire 63 made of a polymer material cuts through the cover of a typical power cable, for example a power cable of the low voltage power grid; because the polymer wire 63 causes friction and/or heat, and thereby cuts the cover and/or melts a cut into the cover.

Furthermore, since the wire 63 is made of a polymer material, which is not an electrically conducting material, the cutting action of the cover of the power cable can also be done safely and without elaborate expert training. Hence, the present invention provides an apparatus 60, that is not only cost-effective and time-efficient for the technical task of cutting the cover of a power cable, but also improve safety, ergonomics, and working in limited spaces. A traditional cable knife is no longer alone required to cut through the cover of the power cable. It is expected that the apparatus and method according to the present invention will revolutionize working with power cables in construction sites, and consequently improve the completion rate and reduce the required time for cabling projects. For example, cabling projects related to the low voltage power grid.

Albeit optionally, not depicted in figure 6, the apparatus may comprise a blade configured to cut the cover of the power cable, wherein the blade is electrically isolated. Said blade mya for example be a ceramic blade or a polymer blade. Alternatively, said blade may be metal, but electrically isolated. More specifically, the first handle and/or the second handle may comprise said electrically isolated blade. Yet specifically, the second conduit part, the first extension, or the second extension may comprise said electrically isolated blade. Said blade may be detachable, replaceable, retractable.

Albeit optionally, not depicted in figure 6, the second space of the second handle may comprise an adhesive, a resin, a clay or a potting material to secure the respective first end and the second end of the wire. Such features for the second handle may mutatis mutandis apply for the first handle, as the first handle and the second handle are the same.

Albeit optionally, not depicted in figure 6, the second space may comprise a second opening, wherein the second handle may comprise a detachable lid for closing the respective second opening of the second space. Said lid may provide access to the respective second space when in open position, and close the second space when in closed position. Such features for the second handle may mutatis mutandis apply for the first handle, as the first handle and the second handle are the same.

Figure 7 depicts, by non-limiting example, an apparatus 70 for cutting a cover of a power cable (not depicted). The apparatus 70 may alternatively be phrased as a tool or a cutting device. The power cable is a typical power cable of a low voltage power grid. The power cable may in some alternative examples be a power cable of a high voltage power grid. The invention may also, in some instances, apply for such power cables.

Referring to figure 7, The apparatus 70 comprises a first handle 71, a second handle 72, and a wire 73. The wire 73 extends along an axis of elongation 74. The wire 73 is flexible. The axis of elongation 74 can be considered as the centerline of the (elongated) wire 73. The wire 73 comprises a first end 75 and an opposite second end 76. The first end 75 of the wire 73 is connected to the first handle 71. The second end 76 of the wire is connected to the second handle 72. The wire 73 has a cross-sectional shape 77. The cross-sectional shape 77 is a star. Here, said cross-sectional shape is embodied as a four-point star, but may alternatively be a three-point star, a five-point star, a six-point star, a seven-point star, an eight-point star.

More specifically, here, the first handle 71 comprises first main bar 711 a first transverse bar 712, wherein the first transverse bar 712 is connected to the first main bar 711, wherein the first transverse bar 712 is arranged transverse to the first main bar 711. Here, the first transverse bar 712 is arranged perpendicular to the first main bar 711, but may alternatively be arranged transverse under an angle different than 90 degrees, such as for example between 70 and 110 degrees. Here, said first main bar 711 and said first transverse bar 712 are monolithic, such as a single injected molded part, molded part, or printed part, but may alternatively be to separate parts. For example, in such alternative cases, the first transverse bar may e.g. be fitted or screwed within the first main bar.

Such a first handle 71 may be advantageous, as a user of said apparatus 70 may hold the first handle 71 with at least one finger at one side of the first transverse bar 712 and with at least one other finger at the other side of the first transverse bar 712 for more grip.

Said first main bar 711 comprises a first main bar length between 3 centimeters and 14 centimeters, preferably between 4 and 8 centimeters. Here, for example, said first main bar length is 8 centimeters. Said first transverse bar 712 comprises a first transverse bar length between 1 centimeters and 10 centimeters, preferably between 1 centimeters and 5 centimeters. Such dimensions may be optimal for a hand grip. Here, for example, said first transverse bar length is 2 centimeters. Such dimensions may be optimal for a hand grip. The diameter of the first transverse bar and the first main bar may be e.g. between 0.5 and 4 centimeters, preferably between 1 and 2 centimeters, such as e.g. between 10 and 14 millimeters.

Still referring to figure 7, the first handle 71 and the second handle 72 are the same. The details of the second handle 72 are therefore not separately depicted. Hence, the features described above for the second handle 71 of the apparatus 70 mutatis mutandis apply for the second handle 72. Thereby, first handle 71 and the second handle 72 are made of an electrically non-conducting material, preferably a polymer (e.g. a plastic or a rubber).

Still referring to figure 7, the apparatus comprises a blade 79. The blade is electrically isolated, hence an electrically isolated blade. The blade 79 may for example be a ceramic blade or a polymer blade. Said blade may alternatively be a metal blade that is electrically isolated. In some examples, said blade may be replaceable, detachable, or retractable (relative to the respective handle). Here, as depicted in figure 7, the blade 79 is arranged only on the first main bar 711 of the first handle 71. Alternatively, the blade is arranged only on the first transverse bar of the first handle. Yet alternatively, a second blade is arranged on a respective second main bar and/or second transverse bar of the second handle.

Still referring to figure 7, according to the present invention, the wire 73 is an electrically non-conducting wire. More specifically, the wire 73 is made of a polymer material. The wire comprises a length of 70 centimeters, but may be envisioned with a different length. Here, said polymer material is Polyamide (PA), but may alternatively be a similar polymer as mentioned in the present application. Still referring to figure 7, the wire has an (effective) diameter of 2 millimeters. Alternatively, said diameter may be between 1 millimeter and 4 millimeters. Such a range is advantageous for both strength and durability.

Still referring to figure 7, the apparatus 70 is configured to cut through the cover of the power cable, wherein the wire 73 made of the polymer material makes the cut. The structure of the apparatus 70 - having the elongated wire 73 in between the two handles 71, 72 - enables easy and ergonomic placement of the apparatus 70 around the cover of the power cable, particularly when working in limited spaces that are crowded with other underground infrastructure. The wire 73 is thereby positioned around the power cable, in between the first handle 61, the second handle 72, and the wire 73. The wire 73 is positioned such that the wire 73 abuts at least part of the (circumference of the) cover of the power cable. By alternately pulling the first handle 71 and the second handle 72, thereby moving (manually) the abutting wire 73 over the cover of the power cable, the wire 73 will cut through the cover. The inventor of the present application has namely found that the wire 73 made of a polymer material cuts through the cover of a typical power cable, for example a power cable of the low voltage power grid; because the polymer wire 73 causes friction and/or heat, and thereby cuts the cover and/or melts a cut into the cover. Moreover, said blade 79 may cut the power cable in the elongated axial direction of the power cable after the wire cuts the circumference of the cover of the power cable.

Furthermore, since the wire 73 is made of a polymer material, which is not an electrically conducting material, the cutting action of the cover of the power cable can also be done safely and without elaborate expert training. Hence, the present invention provides an apparatus 70, that is not only cost-effective and time-efficient for the technical task of cutting the cover of a power cable, but also improve safety, ergonomics, and working in limited spaces. A traditional cable knife is no longer alone required to cut through the cover of the power cable. It is expected that the apparatus and method according to the present invention will revolutionize working with power cables in construction sites, and consequently improve the completion rate and reduce the required time for cabling projects. For example, cabling projects related to the low voltage power grid.

In an alternative embodiment, not depicted, the apparatus as depicted in figure 7 is provided, but wherein the first handle only comprises a first main bar, wherein the wire is connected to the first main bar. This applies mutatis mutandis to the second handle as well.

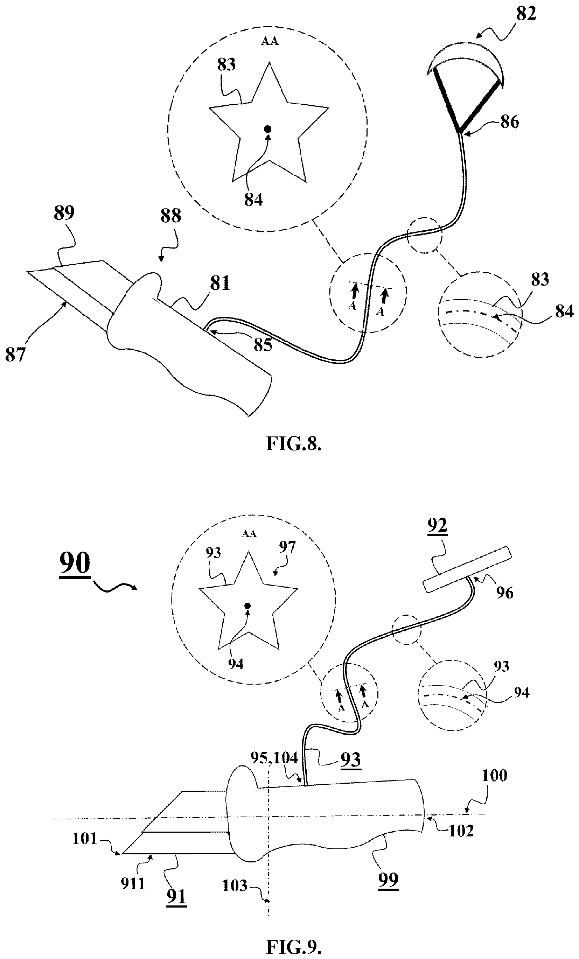

Figure 8 depicts schematically, by non-limiting example, an apparatus 80 for cutting a cover of a power cable (not depicted). The apparatus 80 may alternatively be phrased as a tool or a cutting device.

Referring to figure 8, The apparatus 80 comprises a cable knife 88 comprising a first handle 81 and a blade 89, a second handle 82, and a wire 83. The wire 83 extends along an axis of elongation 84. The wire 83 is flexible. The axis of elongation 84 can be considered as the centerline of the (elongated) wire 83. The wire 83 comprises a first end 85 and an opposite second end 86. The first end 85 of the wire 83 is connected to the first handle 81. The second end 86 of the wire is connected to the second handle 82. The wire 83 has a cross-sectional shape 87. The cross-sectional shape 87 is a star. Here, said cross-sectional shape is embodied as a five-point star, but may alternatively be a three-point star, a four-point star, a six-point star, a seven-point star, an eight-point star

The wire 83 is an electrically non-conducting wire. More specifically, the wire 83 is made of a polymer material. The wire comprises a length of 90 centimeters, but may be envisioned with a different length. For example, the wire 83 may be between 40 and 70 centimeters. Here, said polymer material is Polyamide (PA), but may alternatively be a similar polymer as mentioned in the present application. Still referring to figure 8, the wire has an (effective) diameter of 2,4 millimeters. Alternatively, said diameter may be between 1 millimeter and 4 millimeters. Such a range is advantageous for both strength and durability.

Said blade 89 is electrically isolated. For example, said blade 89 may be a ceramic blade or a polymer blade. Said first end 85 of the wire 83 is connected to the first handle 81 such that the wire 83 extends from the first handle 81 in a direction opposite to (or: opposite and perpendicular to) a cutting edge 87 of the blade 89.

The structure of the apparatus 80 - having the elongated wire 83 in between the two handles 81, 82 - enables easy and ergonomic placement of the apparatus 80 around the cover of the power cable, particularly when working in limited spaces that are crowded with other underground infrastructure. Since the wire 83 is made of a polymer material, which is not an electrically conducting material, the cutting action of the cover of the power cable can also be done safely and without elaborate expert training. Hence, the present invention provides an apparatus 80, that is not only cost-effective and time-efficient for the technical task of cutting the cover of a power cable, but also improve safety, ergonomics, and working in limited spaces. Since the apparatus comprises a cable knife as well, the wire 83 enables to make a circumferential cut through the cover of the power cable more ergonomically, whilst the electrically isolated blade 89 of the cable knife 88 can be used to make a cut in the axial direction of an elongated power cable. It is expected that the apparatus and method according to the present invention will revolutionize working with power cables in construction sites, and consequently improve the completion rate and reduce the required time for cabling projects.

Figure 9 depicts schematically, by non-limiting example, a cable knife 90 according to the invention. The cable knife 90 is arranged for cutting a cover of a power cable according to the invention (in various manners). The cable knife 90 comprises a blade 91, a body 99, a handle 92, and a wire 93 extending along an axis 94 of elongation. A first end 95 of the wire 93 is connected to the body 99 of the cable knife 90. A second end 96 of the wire 93 is connected to the handle 92. The wire 93 is made of a polymer material, such as e.g. Nylon or PA. The cross-section of the wire 93 comprises a cross-sectional shape 97, wherein the cross-sectional shape 97 is a star. Here, the cross-sectional shape 97 is five-point star.

The blade 91 is electrically isolated, hence an electrically isolated blade. Said blade may be made of polymer material or ceramic material or metal material. In examples, the blade may be detachable, retractable and/or replaceable. In examples, the cable knife may further comprise a sleeve configured to slide onto the blade for providing safety. Said sleeve may be made of a polymer material and connected to the cable knife.

Still referring to figure 9, the cable knife 90 comprises a central axis 100 extending between two opposing edges 101, 102 of the cable knife 90, wherein the cable knife 90 comprises a central plane 103 perpendicular to the central axis 100. The blade 91 is arranged between a first edge 101 of the opposing edges and the central plane 103. The cable knife 90 comprises a connection point 104 for connecting the first end 95 of the wire 93 to the cable knife 90, wherein the connection point 104 is arranged between a second edge 102 of the opposing edges and the central plane 103. In examples, the central plane may for example be arranged at the center of the central axis 100. Here, said first end 95 of the wire 93 is connected to the cable knife 90 such that the wire 93 extends from the cable knife 90 in a direction opposite to (or: opposite and perpendicular to) a cutting edge 911 of the blade 91. The body 99 may be a handle.

The cable knife 90 according to the present embodiment is advantageous, as none of the cable knifes known to date have a wire according to the invention for cutting a cover of a power cable. This provides a cable knife an additional means for cutting a cover of a power cable, especially in situations where the blade of the cable knife falls short, e.g. in cluttered and limited spaces, or in more easily making circumferential cuts therein.

## Claims

**1.** An apparatus for cutting a cover of a power cable, wherein the apparatus comprises a first handle, a second handle, and a wire extending along an axis of elongation;
wherein a first end of the wire is connected to the first handle;
wherein a second end of the wire is connected to the second handle;
wherein the wire is made of a polymer material;
wherein a cross-section of the wire comprises a cross-sectional shape;
wherein the cross-sectional shape is a star.

**2.** The apparatus according to claim 1, wherein the wire comprises a diameter between 1 millimeter and 4 millimeters.

**3.** The apparatus according to claim 2, wherein the wire comprises a diameter between 1.5 millimeter and 2.5 millimeters.

**4.** The apparatus according to any one of the preceding claims, wherein the wire comprises a surface texture.

**5.** The apparatus according to any one of the preceding claims 1-4, wherein the wire comprises at least one groove and/or at least one ridge extending along at least part of said axis of elongation.

**6.** The apparatus according to any one of the preceding claims, wherein the power cable is a power cable of a low voltage power grid, wherein the cover comprises a cover material, wherein the polymer material has a higher hardness and/or higher melting temperature than the cover material.

**7.** The apparatus according to any one of the preceding claims, wherein the wire comprises a length between 20 centimeters and 100 centimeters.

**8.** The apparatus according to any one of the preceding claims, wherein the polymer material comprises at least one of: Polyamide (PA), Nylon, Acrylonitrile Butadiene Styrene (ABS), Polycarbonate (PC), Polyoxymethylene (POM), polyvinylidene difluoride (PVDF).

**9.** The apparatus according to any one of the preceding claims, wherein the polymer material comprises glass, stone, rubber, or ceramic particles.

**10.** The apparatus according to any one of the preceding claims, wherein the first end of the wire is fixated in the first handle, wherein the second end of the wire is fixated in the second handle.

**11.** The apparatus according to any one of the preceding claims, wherein the first handle and/or the second handle comprise:
- a central part for connecting respectively said first end and/or said second end, wherein the central part is arranged in a plane perpendicular to the axis of elongation at respectively said first end and/or said second end;
- a first extension arranged around the circumference of the central part, and
- a second extension arranged around the circumference of the central part and diametrically opposed to the first extension.

**11.** The apparatus according to any one of the preceding claims, wherein the apparatus comprises an electrically isolated blade configured to cut the cover of the power cable.

**12.** The apparatus according to claim 11, wherein the electrically isolated blade is a ceramic blade.

**13.** The apparatus according to any one of the preceding claims, wherein the first handle comprises a cable knife.

**14.** The use of the apparatus according any one of the preceding claims to cut a cover of a power cable.

**15.** A method of cutting a cover of a power cable, performed by an apparatus according to claim 1, wherein the method comprises:
- positioning the apparatus around the power cable, wherein the power cable is arranged in between the first handle, the second handle, and the wire; wherein the wire abuts at least part of the cover of the power cable;
- alternately pulling the first handle and the second handle so as to move the abutting wire over the cover of the power cable, so as to cut the cover of the power cable by means of friction and/or heat.
